# EUROPÄISCHE PATENTSCHRIFT

(11) **EP 1 123 906 B1**
(45) Veröffentlichungstag und Bekanntmachung des Hinweises auf die Patenterteilung: **18.08.2004**
(21) Anmeldenummer: 01101162.4
(22) Anmeldetag: 23.01.2001
(51) Int. Cl.: C03C 17/36

(54) **Verfahren zur Herstellung eines wärmereflektierenden Schichtsystems für transparente Substrate und danach hergestelltes Schichtsystem**
Method for the production of heat reflecting coating stack for transparent substrates and thus produced coating stack
Méthode pour la déposition des couches réfléchissantes la chaleur sur des substrats transparents et couches ainsi produites

(30) Priorität: 02.02.2000 DE 10005860; 21.09.2000 DE 10046810
(43) Veröffentlichungstag der Anmeldung: 16.08.2001
(73) Patentinhaber: Fraunhofer-Gesellschaft zur Förderung der angewandten Forschung e.V., 80686 München (DE)
(72) Erfinder: Kirchhoff, Volker, Dr., 01324 Dresden (DE); Kopte, Torsten, Dr., 01157 Dresden (DE); Hartung, Ullrich, Dr., 01129 Dresden (DE); Fahland, Matthias, Dr., 01809 Heidenau (DE)

(56) Entgegenhaltungen:
- WO-A-99/43626
- GB-A- 2 126 256
- US-A- 5 630 886
- US-A- 5 738 947

## Beschreibung

Die Erfindung betrifft ein Verfahren gemäß Anspruch 1 zur Herstellung eines wärmereflektierenden Schichtsystems gemäß Anspruch 7 für transparente Substrate, vorzugsweise Glas, welches aus mindestens einer elektrisch hoch leitfähigen Funktionsschicht, an welche sich mindestens eine metallische Blockerschicht - auch Zwischenschicht genannt - unmittelbar anschließt, und mehreren hochbrechenden Entspiegelungsschichten, besteht. Das Schichtsystem wird auch als low-e-Schichtsystem bezeichnet.
Derartige Schichtsysteme auf Glas eignen sich für einen anschließenden Härt- bzw. Biegeprozess der beschichteten Glasscheibe, z. B. für Fahrzeuge, vorzugsweise auch als wärmedämmende Sicherheitsverglasung.

Es sind eine Vielzahl solcher wärmereflektierende Schichtsysteme bekannt. Das Schichtsystem besteht allgemein aus Funktionsschicht, Grund- und Deckschicht, wobei letztere als Entspiegelungsschichten dienen. Die einzelnen Schichten können sich im Gesamtsystem mehrfach wiederholen. Als Funktionsschicht für die Wärmereflexion werden üblicherweise Edelmetalle - vorzugsweise Silber - aufgrund ihres guten selektiven Reflexionsvermögens schon bei geringen Schichtdicken verwendet. Die Entspiegelungsschichten dienen zur Verbesserung der optischen Eigenschaften im sichtbaren Längenwellenbereich und sind mindestens auf einer Seite der Funktionsschicht oder auf der über der Funktionsschicht aufgebrachten Blockerschicht angeordnet. Die Entspiegelungsschicht beeinflusst entscheidend das Gesamtschichtsystem hinsichtlich dessen elektrischer Eigenschaft, d. h. Leitfähigkeit, der mechanischen Eigenschaften, z. B. Kratzfestigkeit und chemischer Eigenschaften, z. B. Beständigkeit gegen Säuren.

Es ist bekannt, zur Verbesserung der optischen Eigenschaften, insbesondere zur Erhöhung der Transmission im sichtbaren Bereich, hochbrechende Entspiegelungsschichten, vorzugsweise dielektrische Metalloxide oder -nitride, oberhalb und/oder unterhalb der Funktionsschicht anzuordnen. Beim Aufbringen eines Metalloxids als Entspiegelungsschicht auf die Funktionsschicht und beim Biegen und/oder Härten beschichteter Glasscheiben mit dem damit verbundenen Erwärmem kommt es zur Oxidation der Funktionsschicht, zur Diffusion des Silbers in die Entspiegelungsschicht, zur Diffusion von Komponenten der Entspiegelungsschicht in das Silber und/oder zu Agglomerationen innerhalb der Funktionsschicht. Durch diese Effekte werden das Reflexionsvermögen der Beschichtung für Wärmestrahlung sowie die Transmission im sichtbaren Bereich verringert.

Zur Vermeidung dieser Nachteile ist es bekannt, die Funktionsschicht durch geeignete Materialien - Blocker genannt - vor der teilweisen Zerstörung zu schützen, indem eine Blockerschicht oberhalb und/oder unterhalb der Funktionsschicht angeordnet wird (DE 38 25 671; US 4,894,290; DE 196 32 788).
Die bisher bekannten Blockerschichten besitzen jedoch verschiedene Nachteile hinsichtlich der Produktivität, der chemischen Beständigkeit, der Langzeitstabilität, der optischen Eigenschaften und Auswirkungen auf die mechanische Belastbarkeit des Schichtsystems. Beispielsweise besitzt CrNi eine hohe Absorption, wodurch das Transmissionsvermögen bei vorgegebenem Reflexionsgrad in nicht vernachlässigbarer Weise beeinträchtigt wird. Eine teilweise Voroxidation bereits während des Beschichtungsprozesses behebt den Mangel nur unzureichend, und diese ist außerdem nur schwer reproduzierbar. Tantal als Blocker ist sehr teuer. Aluminium ist zwar preisgünstig, besitzt aber keine ausreichende chemische Beständigkeit und neigt außerdem zur Diffusion. Ein Schichtsystem mit Titan als Blocker verfügt nicht über die erforderliche Langzeitstabilität. Die Nutzung von AlMgMn als Blocker führt zu einer unzureichenden mechanischen Belastbarkeit des Schichtsystems.

Weiterhin ist bekannt, dass durch den Einsatz spezieller Silberlegierungen für die Funktionsschicht die teilweise Zerstörung der hoch leitfähigen Hauptkomponente durch die Oxidation der Beimischung mit ggf. vorangehender thermisch induzierter, partieller Entmischung der Legierung vermieden werden kann. Jedoch sind der Grad der Oxidation bzw. der Entmischung und damit die optischen bzw. elektrischen Eigenschaften des Schichtsystems nur schwer zu kontrollieren (DE 198 07 930). Da ein Teil der Beimischung in der Hauptkomponente verbleibt, wird damit die Leitfähigkeit der verbleibenden Legierung geringer sein als die einer reinen Hauptkomponente gleicher Dicke.

Als weitere Möglichkeit, die teilweise Oxidation der Funktionsschicht zu unterdrücken, ist der Einsatz von Nitriden als Entspiegelungsschicht bekannt (US 5,837,108). Jedoch kann auch hier, insbesondere bei härt- oder biegbaren Schichtsystemen, im Allgemeinen nicht gänzlich auf die Anordnung einer Blockerschicht verzichtet werden. Außerdem ist die Brechzahl von Metallnitriden im Allgemeinen deutlich geringer als die von Metalloxiden, was zu einer geringeren Entspiegelung (Bandbreite) führt.

Es ist bekannt, zur Verbesserung der Eigenschaften der Entspiegelungsschicht diese nicht nur als eine einzige Schicht anzuordnen, sondern ein Teilschichtsystem aus mindestens zwei Schichten zu verwenden, die meist aus dielektrischem Material sind (DE 39 41 026; DE 39 41 027). Diese Kombination bestimmt die Gesamteigenschaft. So wird z. B. die Leitfähigkeit verbessert, indem die Entspiegelungsschicht unter der Funktionsschicht angeordnet ist. Die chemische Beständigkeit wird verbessert, wenn die Entspiegelungsschicht über der Funktions- bzw. Blockerschicht angeordnet ist. Es wurde jedoch festgestellt, dass durch die Kombination der zwei einzeln bewerteten Eigenschaften der Einzelschichten als ein Teilschichtsystem insbesondere die mechanische Beständigkeit negativ beeinträchtigt wird. Dieser Mangel wird dadurch beseitigt, dass weitere Einzelschichten in dem System angeordnet werden oder spezielle Verfahren des Aufbringens dieser Schichten angewendet werden; z. B. plasmaaktivierte Beschichtung. Dabei entsteht aber der Nachteil, dass sich die Kosten des Gesamtschichtsystems durch die zusätzlichen Schichten und die spezielle Technologie des Aufbringens erhöhen.

Der Erfindung liegt die Aufgabe zugrunde, ein Verfahren zur Herstellung eines wärmereflektierenden Schichtsystems zu schaffen, welches eine hohe Transmission im Bereich des sichtbaren Lichts und eine hohe Reflexion für längerwellige Strahlung aufweist. Es soll auch farbneutral, mechanisch hochbelastbar, chemisch beständig, langzeitstabil und temperaturbeständig sein. Das Schichtsystem soll für den Fall, dass die Funktionsschicht beidseitig von einer Blockerschicht umgeben ist, außerdem ohne Verringerung der Lichttransmission bzw. des Emissionsvermögens härt- und biegbar sein. Weiterhin soll das Schichtsystem die Mängel des Standes der Technik vermeiden und kostengünstig herstellbar sein. Die Schichten sollen durch Bedampfen oder Aufstäuben - auch Sputtern genannt - im Vakuum aufgebracht werden.

Erfindungsgemäß wird die Aufgabe nach Anspruch 1 und 7 gelöst. Vorteilhafte Ausgestaltungen des Verfahrens sind in den Ansprüchen 2 bis 6 und des Schichtsystems in den Ansprüchen 8 bis 12 beschrieben.

Das Wesen der Erfindung besteht darin, dass die Funktions- und Blockerschicht derart aufgebaut ist, dass die Blockerschicht oder ein Teil dieser als Gradientenschicht hergestellt wird. Werden als Entspiegelungsschicht mehrere Einzelschichten angeordnet und bestehen diese aus unterschiedlichem Material, so werden diese ebenfalls als Gradientenschicht hergestellt. Dazu wird der Materialanteil der einen Schicht von anfangs 100 % bis 0 % reduziert und der Anteil an Material der zweiten Schicht wird umgekehrt von 0 % bis zu 100 % erhöht. Es wurde überraschenderweise festgestellt, dass eine derartige Gradientenschicht die Gesamteigenschaften des Systems wesentlich verbessert und in dem Fall, dass die Blockerschicht als Gradientenschicht ausgebildet ist, ein wesentlich besserer Schutz der Funktionsschicht gegeben ist.

Das erfindungsgemäße Verfahren wird derart ausgeführt, dass die Beschichtungsstationen für die eine Schicht und für die andere Schicht in der Beschichtungsanlage räumlich so angeordnet werden, dass sich die Verteilungen der aufzubringenden Teilchen auf der Substratebene bzw. der vorangegangen bereits aufgebrachten Schicht teilweise überlagern. Infolgedessen besteht die sonst vorhandene Grenze zwischen zwei Schichten unterschiedlichen Materials nicht mehr, sondern es kommt zur Bildung einer mehr oder weniger dicken Gradientenschicht. Die Eigenschaften der Gradientenschicht lassen sich einfach mit Mitteln der Prozessführung, z. B. Abstand der Beschichtungsstationen, Parameter der Energieeinspeisung, Verhältnis der eingespeisten Leistungen, beeinflussen. Somit kann äußerst variabel auf die Eigenschaften des gesamten Schichtsystems Einfluss genommen werden.

Das Verfahren zum Aufbringen einer solchen Gradientenschicht wird zweckmäßig derart ausgeführt, dass sich in Beschichtungsebenen die Dampf- bzw. Plasmakeulen der unterschiedlichen Materialien teilweise überlagern. Es besteht zwischen den Materialien keine Grenze. Beim Aufstäuben im reaktiven Betrieb werden die einzelnen Kathoden des Magnetrons mit unterschiedlichen Targets bestückt.

An drei Ausführungsbeispielen wird die Erfindung beschrieben. Die zugehörigen Zeichnungen zeigen in
- Fig. 1:: ein Schichtsystem mit einer Funktions- und Blockerschicht als Gradientenschicht und beiderseitig angeordneten Entspiegelungsschichten als Einzelschichten,
- Fig. 2:: ein Schichtsystem mit als Gradientenschicht ausgebildeter Funktions- und Blockerschicht und einseitig angeordneter Entspiegelungsschicht,
- Fig. 3:: ein Schichtsystem mit als Gradientenschicht ausgebildeter Funktions- und Blockerschicht und beidseitig angeordneten Entspiegelungsschichten.

Das erfindungsgemäße Verfahren wird wie folgt ausgeführt:

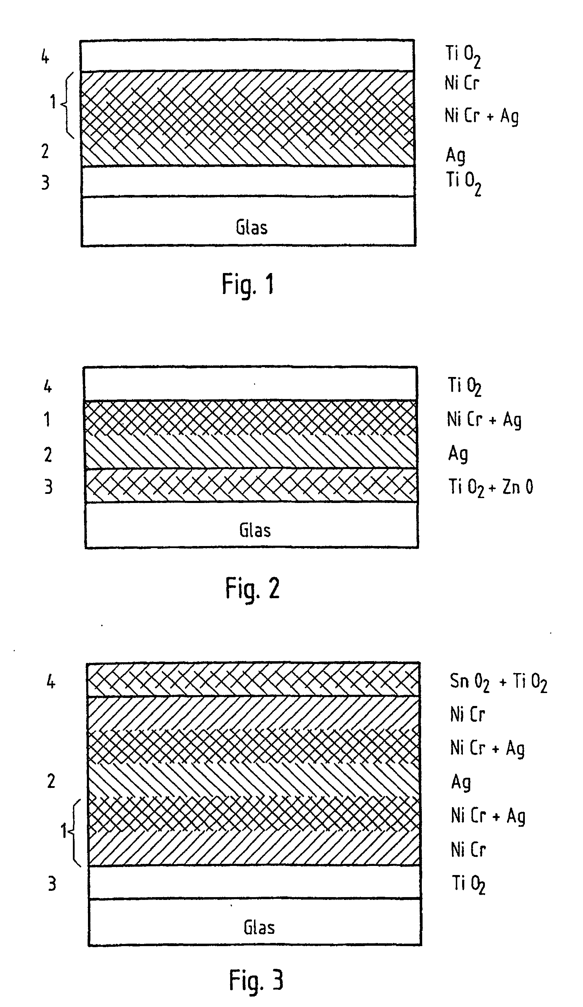

Es soll ein wärmereflektierendes Schichtsystem - wie in Fig. 1 dargestellt - auf einer Glasscheibe aufgebracht werden.

Gemäß der Erfindung ist eine Blockerschicht 1 aus NiCr auf einer Seite einer Funktionsschicht 2 aus Ag angeordnet. Dieses Teilschichtsystem ist zwischen zwei Entspiegelungsschichten (3; 4) aus TiO₂ aufgebracht. In einem ersten Verfahrensschritt wird in bekannter Weise durch Sputtern eine Entspiegelungsschicht 3 aufgebracht. Die Blockerschicht 1 entsteht, indem nach Erreichen der erforderlichen Dicke der Funktionsschicht 2 allmählich das Material der Blockerschicht 1 im Sputterprozess zugeführt wird, indem die räumliche Verteilung über die Dicke der Schicht und Zuführung der Teilchen aus den beiden Sputterquellen mit dem Material der Funktionsschicht 2 und der Blockerschicht 1 entsprechend geregelt wird, damit der Anteil der Teilchen der Funktionsschicht 2 abnimmt und der Anteil der Teilchen der Blockerschicht 1 zunimmt. Nachdem die Blockerschicht 1 nur noch 100 %ig aus dem Material der Blockerschicht besteht, wird darauf eine obere Entspiegelungsschicht 4 in bekannter Weise aufgebracht.

Analog dazu werden verfahrenstechnisch auch die Schichtsysteme nach den Fig. 2 und 3 hergestellt.

Die Fig. 2 zeigt ein Schichtsystem, bei welchem auf der Glasscheibe in einem ersten Verfahrensschritt eine Entspiegelungsschicht 3 als Gradientenschicht aus quasi zwei Einzelschichten aus TiO₂ und ZnO aufgebracht ist. Der Anteil des zuerst aufgebrachten Materials - TiO₂ - geht während des Aufbringens von einem Anteil von 100 % kontinuierlich über die Dicke der Schicht auf 0 % zurück, während der Anteil des nächstfolgenden Materials - ZnO - gegenläufig von 0 % auf 100 % ansteigt. Danach wird die Funktionsschicht 2 aus Ag aufgebracht und auf der Funktionsschicht 2 aus Ag die Blockerschicht 1 als eine durchgehende Gradientenschicht aus NiCr und Ag. Innerhalb dieser Blockerschicht 1 beträgt der Gradient beider Materialien 0 % bis 100 % und umgekehrt. Der Übergang von der Funktionsschicht 2 zur Blockerschicht 1 ist nicht fließend, sondern es liegt eine, wenn auch nicht exakt feststellbare Trennung beider Schichten vor.

Fig. 3 zeigt eine Ausführung des Schichtsystems mit einer Funktionsschicht 2 aus Ag, auf deren beiden Seiten eine Gradientenschicht 1 aus NiCr und Ag aufgesputtert ist, die in das reine Material der Blockerschicht 1 NiCr übergeht. Die Blockerschichten 1 sind zweckmäßig aus Ni80Cr20 und als Gradientenschicht aus Ag-Ni80Cr20 von 0 % auf 100 % übergehend. Die untere Entspiegelungsschicht 3 ist aus TiO₂. Auf dem Teilschichtsystem der Funktions- und Blockerschicht 1; 2 ist eine Entspiegelungsschicht 4 als Gradientenschicht aufgebracht. Diese besteht aus SnO₂ und TiO₂.

Es ist auch möglich, die Ausführungen gemäß Fig. 1 bis Fig. 3 zu kombinieren. Derartige Schichtsysteme bzw. Teilschichtsysteme können auch beispielsweise auf flexible transparente Substrate, wie z. B. Folie, aufgebracht werden.

## Patentansprüche

1. Verfahren zur Herstellung eines wärmereflektierenden Schichtsystems für transparente Substrate, vorzugsweise Glas, bestehend aus mindestens einer Entspiegelungsschicht, die aus einer oder mehreren Einzelschichten besteht, mindestens einer elektrisch hoch leitfähigen Funktionsschicht und einer mindestens auf einer Seite der Funktionsschicht aufgebrachten Blockerschicht, wobei die Schichten durch Aufdampfen oder Sputtern im Vakuum aufgebracht werden, **dadurch gekennzeichnet, dass**
a) die Zuführung der aufzubringenden Teilchen für die Blockerschicht während der Beschichtung so geregelt wird, dass nach dem Aufbringen der Funktionsschicht aus dem Schichtmaterial der Funktionsschicht und der Blockerschicht eine Gradientenschicht zumindest als Bestandteil der Blockerschicht gebildet wird oder
b) die Zuführung der aufzubringenden Teilchen für die Blockerschicht während der Beschichtung so geregelt wird, dass nach dem Aufbringen der Funktionsschicht aus dem Schichtmaterial der Funktionsschicht und der Blockerschicht eine Gradientenschicht zumindest als Bestandteil der Blockerschicht gebildet wird und dass bei der Herstellung der Entspiegelungsschicht, wenn diese aus mehreren Einzelschichten aus unterschiedlichen Materialien besteht, die Zuführung der aufzubringenden Teilchen für die Einzelschichten ebenfalls so geregelt wird, dass jeweils eine Gradientenschicht gebildet wird,
c) wobei das Herstellen der Gradientenschicht oder der Gradientenschichten nach einer Regelung derart erfolgt, dass sich der Anteil des Schichtmaterials der in der Beschichtungsfolge zuerst aufzubringenden Schicht von 100 % auf 0 % und gegenläufig der Anteil des Schichtmaterials der darauf folgenden Schicht von 0 % auf 100 % ändert.

2. Verfahren zur Herstellung eines wärmereflektierenden Schichtsystems nach Anspruch 1, **dadurch gekennzeichnet, dass** die Ausbildung der Gradientenschichten dadurch erzielt wird, dass Beschichtungsstationen für eine Beschichtung mit unterschiedlichen Materialien so angeordnet werden, dass sich die Verteilungen der aufzubringenden Teilchen auf der Substratebene teilweise überlagern.

3. Verfahren zur Herstellung eines wärmereflektierenden Schichtsystems nach Anspruch 1 oder 2, **dadurch gekennzeichnet, dass** die Quellen zur Erzeugung der Dampf- oder Zerstäubungsteilchen für die Gradientenschicht so geregelt werden, dass sich die Anteile der Schichtmaterialien kontinuierlich ändern.

4. Verfahren zur Herstellung eines wärmereflektierenden Schichtsystems nach Anspruch 1 oder 2, **dadurch gekennzeichnet, dass** die Quellen zur Erzeugung der Dampf- oder Zerstäubungsteilchen für die Gradientenschicht so geregelt werden, dass sich die Anteile der Schichtmaterialien diskontinuierlich ändern.

5. Verfahren zur Herstellung eines wärmereflektierenden Schichtsystems nach Anspruch 1 bis 4, **dadurch gekennzeichnet, dass** die Funktionsschicht und/oder Blockerschicht und/oder Entspiegelungsschicht durch unipolares Pulssputtern aufgebracht werden.

6. Verfahren zur Herstellung eines wärmereflektierenden Schichtsystems nach Anspruch 1 bis 4, **dadurch gekennzeichnet, dass** die.Funktionsschicht, die Blockerschicht und die Entspiegelungsschicht durch bipolares Pulssputtern aufgebracht werden, indem je eine Kathode einer Sputterquelle mit dem Material der jeweiligen Einzelschicht bestückt werden.

7. Schichtsystem, hergestellt nach Anspruch 1, bestehend aus mindestens einer Entspiegelungsschicht, die aus einer oder mehreren Einzelschichten besteht, mindestens einer Funktionsschicht, einer mindestens auf einer Seite der Funktionsschicht aufgebrachten Blockerschicht und Haft-, Schutz- und Deckschichten, **dadurch gekennzeichnet, dass**
a) die Blockerschicht (1) zumindest teilweise aus einer Gradientenschicht aus dem Material der Blockerschicht (1) und dem Material der Funktionsschicht (2) besteht oder
b) die Blockerschicht (1) zumindest teilweise aus einer Gradientenschicht aus dem Material der Blockerschicht (1) und dem Material der Funktionsschicht (2) besteht und die Entspiegelungsschicht (4) eine Gradientenschicht aus zwei Materialien für entspiegelnde Schichtstapel ist,
c) wobei sich in jedem Gradienten der Anteil des Materials der zuerst aufgebrachten Schicht über die Dicke des Gradienten von 100 % auf 0 % und der Anteil des Materials der darauffolgenden Schicht gegenläufig von 0 % auf 100 % kontinuierlich oder diskontinuierlich ändert.

8. Schichtsystem nach Anspruch 7, **dadurch gekennzeichnet, dass** die Blockerschicht (1) als Gradientenschicht in die Funktionsschicht (2) derart übergeht, dass eine gesamte Schicht ohne definierte Trennung der Blockerschicht (1) von der Funktionsschicht (2) entsteht.

9. Schichtsystem nach Anspruch 7, **dadurch gekennzeichnet, dass** die Gradientenschicht innerhalb der Blockerschicht (1) als ein Bereich dieser angeordnet ist.

10. Schichtsystem nach Anspruch 7 bis 9, **dadurch gekennzeichnet, dass** auf der Funktionsschicht (2) beiderseits eine Blockerschicht (1) angeordnet ist und das Teilschichtsystem aus beiden Schichtmaterialien bilden.

11. Schichtsystem nach Anspruch 7 bis 10, **dadurch gekennzeichnet, dass** das Material der Funktionsschicht (2) Ag, das Material der Blockerschicht (1) NiCr ist.

12. Schichtsystem nach Anspruch 7, **dadurch gekennzeichnet, dass** die Entspiegelungsschicht (3; 4) aus Einzelschichten aus TiO₂ und/oder ZnO und/oder SnO₂ gebildet sind.

## Claims

1. A method for the production of heat reflecting coating stack for transparent substrates, preferably glass, comprising at least one blooming coat, which comprises one or multiple separate coat, at least one functional coat that is highly conductive and a blocking coat on at least one side of the functional coat, whereby the coats are applied by vapor depositing or sputtering in vacuum, **characterized by**
a) the control of the supply of particles to be applied as blocking coat during coating in such a way that after the application of the functional coat a gradient coat, at least as part of the blocking coat, is formed from the coating material of the functional coat and the blocking coat, or
b) the control of the supply of particles to be applied as blocking coat during coating in such a way that after the application of the functional coat a gradient coat, at least as part of the blocking coat, is formed from the coating material of the functional coat and the blocking coat, and by the same control of the supply of particles to be applied as separate coats during the production of the blooming coat, if it comprises multiple separate coats of varying materials, so that each also forms a gradient coat,
c) whereby the production of the gradient coat or the gradient coats is controlled in such a way that the percentage of the coat material of the coat that is applied first in coating order changes from 100 % to 0 % and vice versa the percentage of the coating material of the following coat from changes from 0 % to 100 %.

2. The method for the production of a heat reflecting coating stack according to claim 1, **characterized in that** gradient coats are formed through the positioning of the coating stations for a coating with different materials in such a way that the distributions of the particles to be applied are partially overlaying on the substrate coat.

3. The method for the production of a heat reflecting coating stack according to claim 1 or 2, **characterized in that** the sources for the creation of steam or atomized particles for the gradient coat are controlled in such a way that the percentage of the coating materials are continuously changing.

4. The method for the production of a heat reflecting coating stack according to claim 1 or 2, **characterized in that** the sources for the creation of steam or atomized particles for the gradient coat are controlled in such a way that the percentage of the coating materials are discontinuously changing.

5. The method for the production of a heat reflecting stack according to claims 1 to 4, **characterized in that** the functional coat and / or the blocking coat and / or the blooming coat are applied through unipolar pulse sputtering.

6. The method for the production of a heat reflecting stack according to claims 1 to 4, **characterized in that** the functional coat, the blocking coat and the blooming coat are applied through unipolar pulse sputtering, by supplying a cathode of the sputter source with the material of the respective separate coat.

7. A coating stack, produced according to claim 1, comprising at least one blooming coat, which comprises one or multiple coats, at least one functional coat, a blocking coat that is applied at least on one side of the functional coat and adhesive, protective and covering coats, **characterized in that**
a) the blocking coat (1) consists at least partially of a gradient coat of the material of the blocking coat (1) and the material of the functional coat (2), or
b) the blocking coat (1) consists at least partially of a gradient coat of the material of the blocking coat (1) and the material of the functional coat (2), and **in that** the blooming coat (4) is a gradient coat consisting of two materials for blooming coating stacks,
c) whereby the percentage of the material of the coat that is applied first changes continuously or discontinuously in each gradient over the thickness of the gradient from 100% to 0% and the percentage of the material of the following coat vice versa. from 0% to 100%.

8. The coating stack according to claim 7, **characterized in that** the blocking coat (1) as gradient coat blends with the functional coat (2) in such a way that a complete coat is formed without a defined separation of the blocking coat (1) from the functional coat (2).

9. The coating stack according to claim 7, **characterized in that** the gradient coat within the blocking coat (1) is formed as a part of it.

10. The coating stack according to claim 7 to 9, **characterized in that** a blocking coat (1) is formed on each side of the functional coat (2) and this coating stack is formed of both coat materials.

11. The coating stack according to claim 7 to 10, **characterized in that** the material of the functional coat (2) is Ag, the material of the blocking coat (1) is NiCr.

12. The coating stack according to claim 7, **characterized in that** the blooming stack (3; 4) is formed from separate layers of TiO₂ and / or ZnO and / or SnO₂.

## Revendications

1. Procédé de fabrication d'un système de couches réfléchissant la chaleur sur des substrats transparents, de préférence du verre, comprenant au moins une couche antireflet composée d'une ou de plusieurs couches individuelles, au moins une couche fonctionnelle à haute conductivité électrique, et au moins une couche de blocage appliquée sur une face de la couche fonctionnelle, les couches étant appliquées par métallisation ou pulvérisation sous vide,
**caractérisé en ce que**
- l'alimentation en particules à appliquer pour la couche de blocage est réglée pendant l'enduction de telle sorte qu'après l'application de la couche fonctionnelle on forme à partir du matériau de couche de la couche fonctionnelle et de la couche de blocage, une couche à gradient faisant au moins partie de la couche de blocage, ou
- l'alimentation en particules à appliquer pour la couche de blocage est réglée pendant l'enduction de telle sorte qu'après l'application de la couche fonctionnelle on forme à partir du matériau de couche de la couche fonctionnelle et de la couche de blocage, une couche à gradient faisant au moins partie de la couche de blocage, et lors de la fabrication de la couche antireflet, si celle-ci est composée de plusieurs couches individuelles de différents matériaux, l'alimentation en particules à appliquer pour les couches individuelles est également réglée de telle sorte qu'il se forme respectivement une couche à gradient,
- la fabrication de la couche à gradient ou des couches à gradient après un réglage étant effectuée de telle sorte que la proportion du matériau de couche de la première couche appliquée dans l'ordre d'enduction varie de 100% à 0% et, inversement, la proportion du matériau de couche de la couche suivante varie de 0% à 100%.

2. Procédé de fabrication d'un système de couches réfléchissant la chaleur selon la revendication 1,
**caractérisé en ce que**
la formation des couches à gradient est obtenue en disposant des postes d'enduction pour une enduction avec différents matériaux de telle sorte que les répartitions des particules à appliquer se superposent partiellement sur le plan du substrat.

3. Procédé de fabrication d'un système de couches réfléchissant la chaleur selon la revendication 1 ou 2,
**caractérisé en ce que**
les sources pour générer les particules de vapeur ou de pulvérisation pour la couche à gradient sont réglées de telle sorte que les proportions des matériaux de couche varient de manière continue.

4. Procédé de fabrication d'un système de couches réfléchissant la chaleur selon la revendication 1 ou 2,
**caractérisé en ce que**
les sources pour générer les particules de vapeur ou de pulvérisation pour la couche à gradient sont réglées de telle sorte que les proportions des matériaux de couche varient de manière discontinue.

5. Procédé de fabrication d'un système de couches réfléchissant la chaleur selon la revendication 1 à 4,
**caractérisé en ce que**
la couche fonctionnelle et/ou la couche de blocage et/ou la couche antireflet sont appliquées par pulvérisation à impulsions unipolaire.

6. Procédé de fabrication d'un système de couches réfléchissant la chaleur selon la revendications 1 à 4,
**caractérisé en ce que**
la couche fonctionnelle, la couche de blocage et la couche antireflet sont appliquées par pulvérisation à impulsions bipolaire, en munissant respectivement une cathode d'une source de pulvérisation par le matériau de la couche individuelle respective.

7. Système de couches selon la revendication 1, comprenant au moins une couche antireflet composée d'une ou de plusieurs couches individuelles, au moins une couche fonctionnelle, une couche de blocage appliquée sur au moins une face de la couche fonctionnelle, des couches d'adhésion, de protection et de couverture,
**caractérisé en ce que**
a) la couche de blocage (1) est au moins partiellement composée d'une couche à gradient réalisée à partir du matériau de la couche de blocage (1) et du matériau de la couche fonctionnelle (2), ou
b) la couche de blocage (1) est au moins partiellement composée d'une couche à gradient réalisée à partir du matériau de la couche de blocage (1) et du matériau de la couche fonctionnelle (2), et la couche antireflet (4) est une couche à gradient en deux matériaux pour des piles de couches antireflet,
c) dans chaque gradient la proportion du matériau de la première couche appliquée étant variable sur l'épaisseur du gradient de manière continue ou discontinue de 100% à 0% et la proportion du matériau de la couche suivante, inversement, de 0% à 100%.

8. Système de couches selon la revendication 7,
**caractérisé en ce que**
la couche de blocage (1) passe en tant que couche à gradient dans la couche fonctionnelle (2) pour ainsi constituer une couche totale sans séparation définie entre la couche de blocage (1) et la couche fonctionnelle (2).

9. Système de couches selon la revendication 7,
**caractérisé en ce que**
la couche à gradient est disposée à l'intérieur de la couche de blocage (1) comme une zone de celle-ci.

10. Système de couches selon la revendication 7 à 9,
**caractérisé en ce qu'**
une couche de blocage (1) est disposée aux deux faces de la couche fonctionnelle (2) formant le système de couches partiel à partir des deux matériaux de couche.

11. Système de couches selon la revendication 7 à 10,
**caractérisé en ce que**
le matériau de la couche fonctionnelle (2) est de l'Ag et le matériau de la couche de blocage (1) du NiCr.

12. Système de couches selon la revendication 7,
**caractérisé en ce que**
la couche antireflet (3 ; 4) est formée à partir de couches individuelles en TiO₂ et/ou ZnO et/ou SnO₂.
